# EUROPEAN PATENT APPLICATION

(11) **EP 2 857 655 A1**
(43) Date of publication of application: **08.04.2015**
(21) Application number: 14186683.0
(22) Date of filing: 26.09.2014
(51) Int. Cl.: F02C 3/107, F02C 7/36

(54) **Geared gas turbine engine architecture for enhanced efficiency**

(30) Priority: 03.10.2013 US 201314044971
(71) Applicant: UNITED TECHNOLOGIES CORPORATION, Hartford, CT 06101 (US)
(72) Inventor: Hasel, Karl L., Manchester, CT Connecticut 06040 (US)
(74) Representative: Hull, James Edward

(57) **Abstract**

A gas turbine engine (62) includes a geared architecture (48) rotatably coupled to the fan drive shaft (40), and a high pressure compressor (54). The gas turbine engine (62) is configured so that a core temperature at an exit of the high-pressure compressor (54) is approximately in a range of 621 to 732°C at take-off and an Exhaust Velocity Ratio, defined by a ratio of a fan stream exhaust velocity to a primary stream exhaust velocity, is approximately in a range of about 0.75 to about 0.90. A Bypass Ratio of the engine is greater than about 8.0.

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-temperature exhaust gas flow. The high-temperature exhaust gas flow expands through the turbine section to drive the compressor and the fan section. The compressor section typically includes first and second compressor sections, and the turbine section typically includes first and second turbine sections. Of course, fewer or more compressor and/or turbine sections may be used.

Generally, a first (or high pressure) turbine section drives a first (or high) pressure) compressor section through an outer shaft to form a first (or high) spool, and a second (or low pressure) turbine section drives a second (or low pressure) compressor section through an inner shaft to form a second (or low) spool. The fan section may also be driven by the low inner shaft. A speed reduction device such as an epicyclical gear assembly may be utilized to drive the fan section such that the fan section may rotate at a speed different than the turbine section so as to increase the overall propulsive efficiency of the engine. In such engine architectures, a shaft driven by one of the turbine sections may provide an input to the epicyclical gear assembly to drive the fan section at a reduced speed such that both the turbine section and the fan section can rotate at closer to optimal speeds.

Although geared architectures generally provide the promise of improved propulsive efficiency, turbine engine manufacturers continue to seek ways to realize such capabilities and to achieve further improvements to engine performance including improvements to thermal, transfer, and propulsive efficiencies.

### SUMMARY

Amongst the various features of the present invention, it has been discovered that the efficiency of a high bypass turbofan engine can be improved, when operating at about 35,000 feet and at about 0.8 Mach, by employing a speed reduction device (having a reduction ratio of about 2.3 to about 4.2) to drive the fan at a slower speed, setting an Exhaust Velocity Ratio of the engine to be in range of about 0.7 to about 0.90, and operating at a fan pressure ratio of less than about 1.50.

A gas turbine engine according to an exemplary aspect of the present disclosure includes, among other things, a fan having a drive shaft, the fan being configured to direct air into a bypass duct and into an engine core. The gas turbine engine further includes a geared architecture that is rotatably coupled to the fan drive shaft. The gas turbine engine further includes a first compressor section. The gas turbine engine is configured to have a core temperature at an exit of the first compressor section is in a range of about 1150 to about 1350 degrees Fahrenheit at take-off. The gas turbine engine is configured so that a ratio of a fan stream exhaust velocity divided by a primary stream exhaust velocity is in a range of about 0.75 to about 0.90. A ratio of a volume of air passing into the bypass duct divided by a volume of air passing into the engine core is greater than about 8.0.

In a further non-limiting embodiment of the foregoing gas turbine engine, the first compressor section is a high pressure compressor.

In a further non-limiting embodiment of any of the foregoing gas turbine engines, the engine is configured so that the ratio of the fan stream exhaust velocity divided by the primary stream exhaust velocity is in the range when cruising at about 35,000 feet and when operating at about a 0.80 Mach number cruise power condition.

In a further non-limiting embodiment of any the foregoing gas turbine engines, a ratio of air pressure across a blade of the fan is configured to be less than about 1.45 at about 35,000 feet and when operating at about a 0.80 Mach number cruise power condition.

In a further non-limiting embodiment of any of the foregoing gas turbine engines, the engine is configured so that the ratio of the fan stream exhaust velocity divided by the primary stream exhaust velocity is in the range when the fan stream exhaust velocity is less than about 1175 feet per second.

In a further non-limiting embodiment of any of the foregoing gas turbine engines, the fan has less than about 26 fan blades.

In a further non-limiting embodiment of any of the foregoing gas turbine engines, the fan has less than about 20 fan blades.

A gas turbine engine according to another exemplary aspect of the present disclosure includes, among other things, a fan having drive shaft, the fan being configured to direct air into a bypass duct and into an engine core. The gas turbine engine further includes a geared architecture rotatably coupled to the fan drive shaft, the geared architecture having a speed reduction ratio that is greater than or equal to about 2.3. The gas turbine engine further includes a first compressor section. The gas turbine engine is configured to have a core temperature at an exit of the first compressor section is in a range of about 1150 to about 1350 degrees Fahrenheit at take-off. A ratio of a volume of air passing into the bypass duct divided by a volume of air passing into the engine core is greater than about 8.0. The gas turbine engine is configured so that a ratio of a fan stream exhaust velocity divided by a primary stream exhaust velocity, is greater than about 0.75.

In a further non-limiting embodiment of the foregoing gas turbine engine, the first compressor section is a high pressure compressor.

In a further non-limiting embodiment of any of the foregoing gas turbine engines, the engine is configured so that the ratio of the fan stream exhaust velocity divided by the primary stream exhaust velocity is in the range when cruising at about 35,000 feet and when operating at about a 0.80 Mach number cruise power condition.

In a further non-limiting embodiment of any of the foregoing gas turbine engines, a Fan Pressure Ratio for the engine may be less than 1.45 at 35,000 feet and when operating at a 0.80 Mach number cruise power condition.

In a further non-limiting embodiment of any of the foregoing gas turbine engines, the engine is configured so that the ratio of the fan stream exhaust velocity divided by the primary stream exhaust velocity is in the range when the fan stream exhaust velocity is less than about 1175 feet per second.

In a further non-limiting embodiment of any of the foregoing gas turbine engines, the fan has less than about 26 fan blades.

In a further non-limiting embodiment of any of the foregoing gas turbine engines, the fan has less than about 20 fan blades.

A gas turbine engine according to yet another exemplary aspect of the present disclosure includes, among other things, a fan having drive shaft, the fan being configured to direct air into a bypass duct and into an engine core. The gas turbine engine further includes a geared architecture rotatably coupled to the fan drive shaft, the geared architecture having a speed reduction ratio that is greater than or equal to about 2.3. The gas turbine engine further includes a first compressor section. The gas turbine engine is configured to have a core temperature at an exit of the first compressor section is in a range of about 1150 to about 1350 degrees Fahrenheit at take-off. A ratio of a volume of air passing into the bypass duct divided by a volume of air passing into the engine core is greater than about 8.0. The gas turbine engine is configured so that a ratio of a fan stream exhaust velocity divided by a primary stream exhaust velocity, is less than about 0.90.

In a further non-limiting embodiment of the foregoing gas turbine engine, the first compressor section is a high pressure compressor.

In a further non-limiting embodiment of any of the foregoing gas turbine engines, the engine is configured so that the ratio of the fan stream exhaust velocity divided by the primary stream exhaust velocity is in the range when cruising at about 35,000 feet and when operating at about a 0.80 Mach number cruise power condition.

In a further non-limiting embodiment of any of the foregoing gas turbine engines, a ratio of air pressure across a blade of the fan for the engine is configured to be less than about 1.45 at about 35,000 feet and when operating at about a 0.80 Mach number cruise power condition.

In a further non-limiting embodiment of any of the foregoing gas turbine engines, the engine is configured so that the ratio of the fan stream exhaust velocity divided by the primary stream exhaust velocity is in the range when the fan stream exhaust velocity is less than about 1175 feet per second.

A gas turbine engine according to yet another exemplary aspect of the present disclosure includes, among other things, a fan having drive shaft, the fan being configured to direct air into a bypass duct and into an engine core. The gas turbine engine further includes a geared architecture rotatably coupled to the fan drive shaft, the geared architecture having a speed reduction ratio that is approximately in a first range of about 2.3 to about 4.2. The gas turbine engine is configured so that a ratio of a fan stream exhaust velocity divided by a primary stream exhaust velocity, is in a second range of about 0.75 to about 0.90 when cruising at about 35,000 feet and when operating at about a 0.80 Mach number cruise power condition. A ratio of air pressure across a blade of the fan is configured to be less than about 1.50 at about 35,000 feet and when operating at about a 0.80 Mach number cruise power condition. A ratio of a volume of air passing into the bypass duct divided by a volume of air passing into the engine core is greater than about 8.0.

In a further non-limiting embodiment of the foregoing gas turbine engine, the ratio of air pressure across a blade of the fan is configured to be less than about 1.45 at about 35,000 feet and when operating at about a 0.80 Mach number cruise power condition.

In a further non-limiting embodiment of any of the foregoing gas turbine engines, the engine is configured so that the ratio of the fan stream exhaust velocity divided by the primary stream exhaust velocity is in the range when the fan stream exhaust velocity is less than about 1175 feet per second.

In a further non-limiting embodiment of any of the foregoing gas turbine engines, the engine is configured so that the ratio of the fan stream exhaust velocity divided by the primary stream exhaust velocity is in the range when the fan stream exhaust velocity is less than about 1175 feet per second.

In a further non-limiting embodiment of any of the foregoing gas turbine engines, a tip speed of the fan blade is less than about 1200 ft/ second.

In a further non-limiting embodiment of any of the foregoing gas turbine engines, a tip speed of the fan blade is less than about 1150 ft/ second.

In a further non-limiting embodiment of any of the foregoing gas turbine engines, a tip speed of the fan blade is less than about 1200 ft/ second.

In a further non-limiting embodiment of any of the foregoing gas turbine engines, a tip speed of the fan blade is less than about 1150 ft/ second.

In a further non-limiting embodiment of any of the foregoing gas turbine engines, the engine includes a first compressor section. The gas turbine engine is configured to have a core temperature at an exit of the first compressor section is in a range of about 1150 to about 1350 degrees Fahrenheit at take-off,

In a further non-limiting embodiment of any of the foregoing gas turbine engines, the ratio of air pressure across a blade of the fan is configured to be less than about 1.45 at about 35,000 feet and when operating at about a 0.80 Mach number cruise power condition.

In a further non-limiting embodiment of any of the foregoing gas turbine engines, a tip speed of the fan blade is less than about 1200 ft/ second.

The present invention extends a method of operating a gas turbine engine according to any of the above aspects or embodiments thereof, or any of the claims.

### DESCRIPTION OF THE FIGURES

The various features and advantages of the disclosed examples will become apparent to those skilled in the art from the detailed description. The figures that accompany the detailed description can be briefly described as follows:
Figure 1 shows a section view of an example gas turbine engine.
Figure 2 shows an example embodiment of the gas turbine engine of Figure 1.

### DETAILED DESCRIPTION

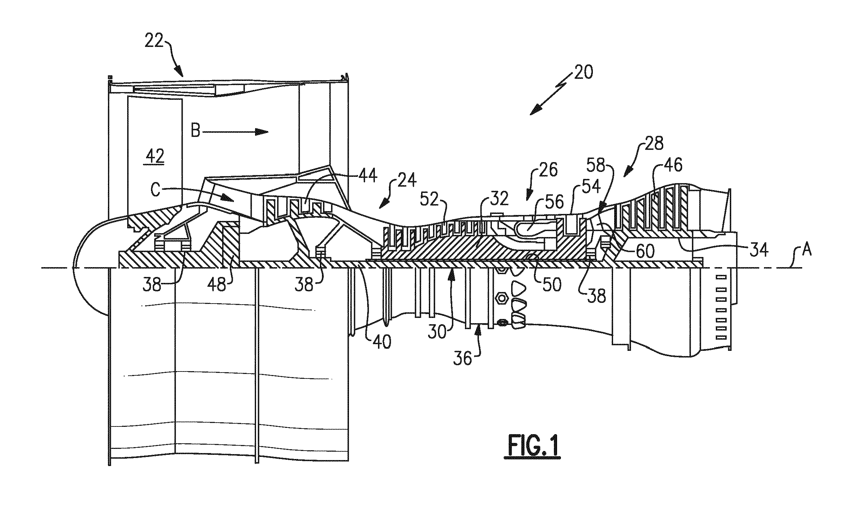

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. A ratio of the volume of air passing along the bypass B flow path divided by the volume of air passing along the core flow path C is defined as a bypass ratio. In the combustor section 26, air is mixed with fuel and ignited to generate a high temperature exhaust gas stream that expands through the turbine section 28 where energy is extracted and utilized to drive the fan section 22 and the compressor section 24.

Although the disclosed non-limiting embodiment depicts a two-spool gas turbine gas turbine engine, it should be understood that the concepts described herein are not limited to use with two-spool gas turbines as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a first (or low) pressure compressor section 44 to a first (or low) pressure turbine section 46. The inner shaft 40 drives the fan 42 (directly or indirectly) through a speed change device, such as a geared architecture 48, to drive the fan 42 at a lower speed than the low speed spool 30. The high-speed spool 32 includes an outer shaft 50 that interconnects a second (or high) pressure compressor section 52 and a second (or high) pressure turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. In another example, the high pressure turbine includes three or more stages. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high temperature exhaust gases that are then expanded through the high pressure turbine 54 and low pressure turbine 46. The mid-turbine frame 58 includes vanes 60, which are in the core airflow path and may function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10) and another example being greater than about ten (10) and less than twenty-two (22). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 10,668 metres (35,000 feet). The flight condition of 0.8 Mach and 35,000 ft., with the engine at its best fuel consumption -- also known as bucket cruise Thrust Specific Fuel Consumption (TSFC) -- is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45. And, in other non-limiting embodiments the low fan pressure ratio may be less than about 1.40 or less than about 1.30.

"Low corrected fan tip speed" is the actual fan tip speed in ft/sec divided by an industry standard temperature correction of [(Tram °R)/ (518.7°R)]^0.5. The "Low corrected fan tip speed", as disclosed herein according to one non-limiting embodiment, is less than about 365.8 m/second (1200 ft/second). In other embodiments, the fan tip speed is less than about 350.5 m/second (1150 ft/second). And, in other embodiments the fan tip speed is less than about 335.3 m/second (1100 ft/second).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades in the fan section 22 disclose an example gas turbine engine 20 with increased power transfer efficiency.

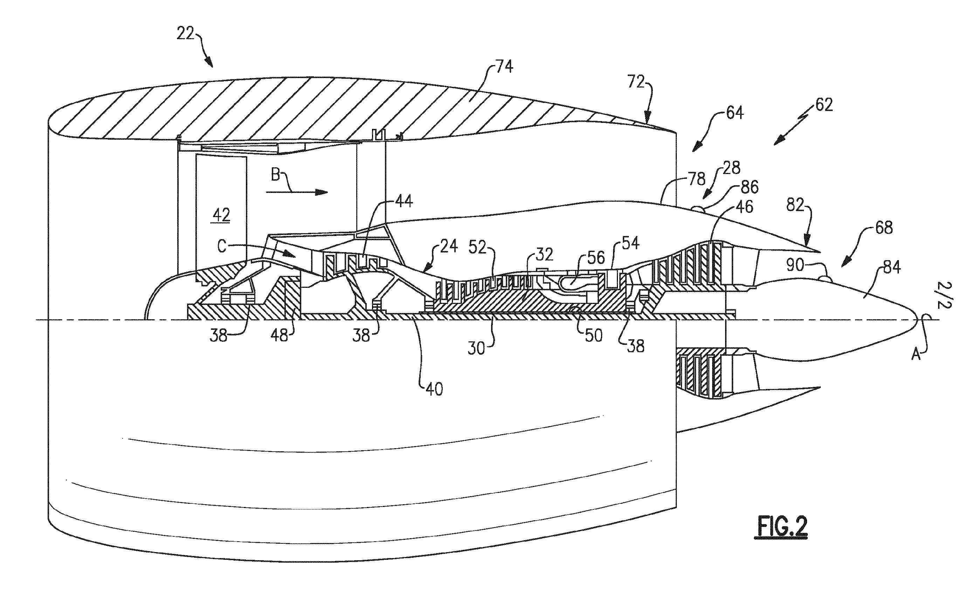

Referring now to Figure 2, an engine 62 is a variation of the engine 20. The engine 62 has a fan stream exhaust 64 and a primary stream exhaust 68. Generally, the bypass flow B exits through the fan stream exhaust 64, and the core flow C exits through the primary stream exhaust 68.

The fan stream exhaust 64 is provided between a nacelle nozzle 72 (at an aft area of a nacelle 74) and an engine casing 78. The primary stream exhaust 68 is provided between a casing nozzle 82 (at an aft area of the casing 78) and a tailcone 84. Flow through the primary stream exhaust 68 has been expanded through the low pressure turbine 46.

During operation, a ratio of a velocity of flow through the fan stream exhaust 64 to a velocity of flow through the primary stream exhaust 68, termed the "Engine Exhaust Stream Velocity Ratio," (or the "Exhaust Velocity Ratio") is in a range from approximately about 0.75 to about 0.90. In other words, the Exhaust Velocity Ratio = (fan stream exhaust velocity)/(primary stream exhaust velocity). Particularly, in geared engine designs having a speed reduction ratio of from 2.3 to 4.2 (and more particularly when used in combination with any one or more of: a bypass ratio of greater than about 6.0, a fan pressure ratio of less than about 1.50, a fan tip speed of less than about 1200 ft/second, and a low pressure turbine pressure ratio of greater than about 5.0), an Exhaust Velocity Ratio in the stated, desired range has been found to reduce overall fuel consumption compared to engines having this relationship falling outside of this range.

The geometries of the engine 62 and the nacelle 74 could be selected to achieve the stated range for the Exhaust Velocity Ratio during cruise operation. The fan pressure ratio, total fan inlet flow, and bypass ratio could be selected to achieve the desired Exhaust Velocity Ratio.

Changes to the fan pressure ratio could be achieved by changing the number of fan blades and/or geometry of the fan blades in terms of, for example, shape, chord length, sweep angle, bowing, etc. The fan stream nozzle throat area is the minimum flow area at the exit of the fan nozzle 72. The primary stream nozzle throat area is the minimum flow area at the exit of the primary nozzle 82 over the tail cone 84. These areas could be designed for values to achieve a selected total fan flow and bypass ratio. Selection of a combination of these geometries would cause the engine 62 to operate at the desired Exhaust Velocity Ratio.

Notably, an engine designed to operate within the stated envelope for the Exhaust Velocity Ratio falls within the scope of the disclosure, even if the engine is not continuously operating within that envelop. A person having skill in this art and the benefit of this disclosure could calculate, for example, an engine exhaust stream velocity ratio during a particular operating condition based on the designed fan stream exhaust and other parameters.

In one example, the engine 62 exhibits a relationship of a fan stream exhaust velocity to primary stream exhaust velocity within this range when the engine 62 is cruising at about 35,000 feet and operating at about a 0.80 Mach number cruise power condition. Probes 86 and 90 may be located at or near the fan stream exhaust 64 and the primary stream exhaust 68 to measure the respective pressure and temperature of the flows, from which exhaust velocities can be determined in order to verify that the designed fan and primary stream exhausts result in the desired ratio.

One characteristic of the engine 62 is that a fan pressure ratio of the engine 62 is less than about 1.45 when the engine 62 is cruising at about 35,000 feet and operating at about a 0.80 Mach number cruise power condition.

Another characteristic of the engine 62 is that a designed bypass ratio of the engine 62 is greater than about 8.0. Flow need not be actively moving through the engine 62 for the engine 62 to have a designed bypass ratio that is greater than about 8.0.

Yet another characteristic of the engine 62 is that the geared architecture 48 has a speed reduction ratio of from about 2.3 to 4.2.

Yet another characteristic of the engine 62 is that that core temperature at an exit of the high pressure compressor is approximately in a range of about 1150 to about 1350 degrees Fahrenheit when at take-off. More specifically, the temperature is in the range of about 621 to about 732°C (about 1150 to about 1350°F) during a sea level, hot day take-off.

In one example, the fan stream exhaust velocity is less than about 1175 ft/s (358 m/s) when the engine is cruising at about 35,000 feet and operating at about a 0.80 Mach number cruise power condition.

Features of the disclosed examples include a fan stream to primary stream exhaust velocity relationship that advantageously results in reduced fuel consumption by improving propulsive efficiency and overall engine efficiency.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20; 62) comprising:
a fan (42) having a drive shaft (40), the fan (42) being configured to direct air into a bypass duct and into an engine core;
a geared architecture (48) rotatably coupled to the fan drive shaft (40); and
a first compressor section (24), wherein the gas turbine engine (20; 62) is configured to have a core temperature at an exit of the first compressor section (24) in a range of 621 to 732°C (1150 to 1350°F) at take-off, the gas turbine engine (20; 62) is configured so that a ratio of a fan stream exhaust (64) velocity divided by a primary stream exhaust (68) velocity is in a range of 0.75 to 0.90, and a ratio of a volume of air passing into the bypass duct divided by a volume of air passing into the engine core is greater than 8.0.

2. A gas turbine engine (20; 62) comprising:
a fan (42) having a drive shaft (40), the fan (42) being configured to direct air into a bypass duct and into an engine core;
a geared architecture (48) rotatably coupled to the fan drive shaft (40), the geared architecture (48) having a speed reduction ratio that is greater than or equal to 2.3; and
a first compressor section (24), wherein the gas turbine engine (20; 62) is configured to have a core temperature at an exit of the first compressor section (24) in a range of 621 to 732°C (1150 to 1350°F) at take-off, a ratio of a volume of air passing into the bypass duct divided by a volume of air passing into the engine core is greater than 8.0 and the gas turbine engine (20; 62) is configured so that a ratio of a fan stream exhaust (64) velocity divided by a primary stream exhaust (68) velocity, is greater than 0.75.

3. A gas turbine engine (20; 62) comprising:
a fan (42) having a drive shaft (40), the fan (42) being configured to direct air into a bypass duct and into an engine core;
a geared architecture (48) rotatably coupled to the fan drive shaft (40), the geared architecture (40) having a speed reduction ratio that is greater than or equal to 2.3; and
a first compressor section (24), wherein the gas turbine engine (20; 62) is configured to have a core temperature at an exit of the first compressor section (24) in a range of 621 to 732°C (1150 to 1350°F) at take-off, a ratio of a volume of air passing into the bypass duct divided by a volume of air passing into the engine core is greater than 8.0 and the gas turbine engine (20; 62) is configured so that a ratio of a fan stream exhaust (64) velocity divided by a primary stream exhaust (68) velocity, is less than about 0.90.

4. The gas turbine engine (20; 62) of any of claims 1 to 3, wherein the first compressor section (24) is a high pressure compressor (54).

5. The gas turbine engine (20; 62) of any preceding claim, wherein the engine is configured so that the ratio of the fan stream exhaust (64) velocity divided by the primary stream (68) exhaust velocity is in the range when cruising at about 10668 metres (35,000 feet) and when operating at about a 0.80 Mach number cruise power condition.

6. A gas turbine engine (20; 62) comprising:
a fan (42) having a drive shaft (40), the fan (42) being configured to direct air into a bypass duct and into an engine core; and
a geared architecture (48) rotatably coupled to the fan drive shaft (40), the geared architecture (48) having a speed reduction ratio that is approximately in a first range of 2.3 to 4.2, wherein the gas turbine engine (20; 62) is configured so that a ratio of a fan stream exhaust (64) velocity divided by a primary stream (68) exhaust velocity, is in a second range of 0.75 to 0.90 when cruising at about 10,668 metres (35,000 feet) and when operating at about a 0.80 Mach number cruise power condition, a ratio of air pressure across a blade of the fan (42) is configured to be less than 1.50 at about 35,000 feet and when operating at about a 0.80 Mach number cruise power condition and a ratio of a volume of air passing into the bypass duct divided by a volume of air passing into the engine core is greater than 8.0.

7. The gas turbine engine (20; 62) of claim 6, further comprising a first compressor section (24), wherein the gas turbine engine (20; 62) is configured to have a core temperature at an exit of the first compressor section (24) in a range of 621 to 732°C (1150 to 1350°F) at take-off.

8. The gas turbine engine (20; 62) of any preceding claim, wherein a ratio of air pressure across a blade of the fan (42) is configured to be less than 1.45 at about 10668 metres (35,000 feet) and when operating at about a 0.80 Mach number cruise power condition.

9. The gas turbine engine (20; 62) of any preceding claim, wherein the engine (20; 62) is configured so that the ratio of the fan stream exhaust (64) velocity divided by the primary stream (68) exhaust velocity is in the range when the fan stream exhaust velocity is less than 358 m/second (1175 ft/second).

10. The gas turbine engine (20; 62) of any preceding claim, wherein the fan (42) has less than 26 fan blades.

11. The gas turbine engine (20; 62) of claim 10, wherein the fan (42) has less than 20 fan (42) blades.

12. The gas turbine engine (20; 62) of any preceding claim, wherein a tip speed of a or the fan blade is less than 365.8 m/second (1200 ft/second).

13. The gas turbine engine (20; 62) of claim 12, wherein a tip speed of a or the fan blade is less than 350.5 m/second (1150 ft/second).
